# EUROPEAN PATENT SPECIFICATION

(11) **EP 1 547 893 B1**
(45) Date of publication and mention of the grant of the patent: **06.06.2007**
(21) Application number: 04029567.7
(22) Date of filing: 14.12.2004
(51) Int. Cl.: B60V 1/11, B66F 3/35

(54) **Method and apparatus for controlling lift of a structural object**
Verfahren und Vorrichtung zur Steuerung der Hubhöhe eines Objekts
Procédé et dispositif de réglage de la hauteur de levage d'un objet

(30) Priority: 22.12.2003 JP 2003425710
(43) Date of publication of application: 29.06.2005
(73) Proprietor: NIPPON STEEL CORPORATION, Tokyo 100 (JP)
(72) Inventor: Takasaki, Hiroshi c/o Nippon Steel Corp., Tobata-ku Kitakyushu-shi Fukuoka (JP); Takeda, Yuuichi c/o Nippon Steel Corp., Tobata-ku Kitakyushu-shi Fukuoka (JP); Watanabe, Kazuyoshi c/o Nippon Steel Corp., Tobata-ku Kitakyushu-shi Fukuoka (JP)
(74) Representative: Vossius & Partner

(56) References cited:
- DE-C1- 3 400 101
- GB-A- 1 505 839
- GB-A- 2 160 487
- US-A- 3 340 943

## Description

The invention relates to a method and apparatus for controlling the lift of at least one structural object where the structure(s) is (are) lifted-and-transported using a plurality of air-casters each of which has a torus bag capable of lifting the structure(s) so as to be easily moved. Lift-and-transportation includes a stage from initiating lift to completion of the lift, a stage of transporting a structure while being lifted, and a stage of initiating landing (lifting down) to completion of the landing.

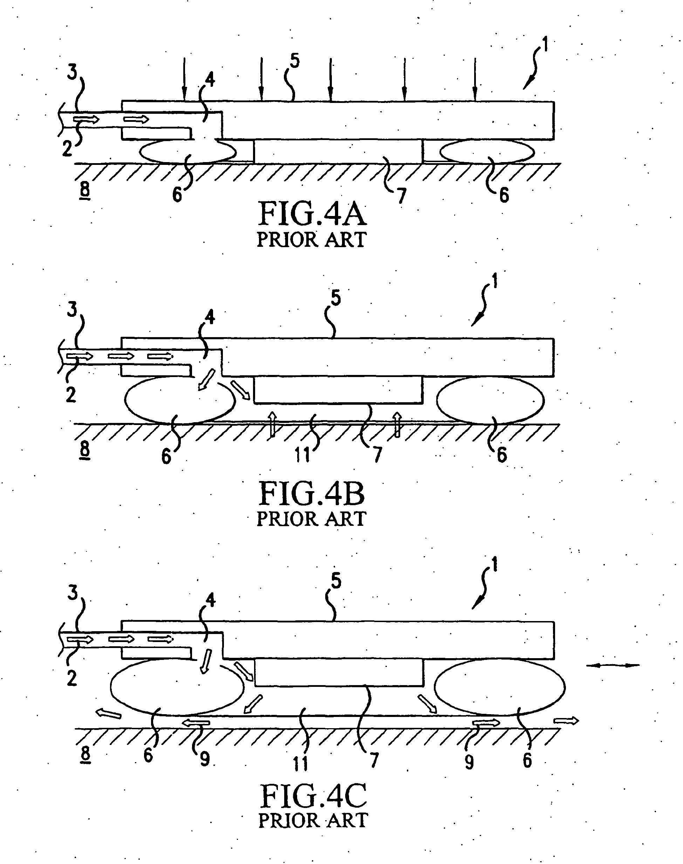

The publication of unexamined applications JP2001-2400A is an example of a description of a lift-and-transportation apparatus using a plurality of air-casters. The air-caster has a structure such as one shown in FIG.4 where the air-caster includes a torus bag (doughnut-shaped bag)(6), piping (3) for feeding compressed air (2) into the torus bag, a landing pad (7) being in contact with a floor (ground) (8) while the compressed air is not fed into the torus bag, and a base plate(mounting plate) (5) contacting a structural object to be lifted-and-transported. The air-caster itself is supported by the landing pad wherein the bottom face contacts the floor while the torus bag is in a relaxed state (as shown in FIG.4-(a)). When compressed air is fed into the torus bag, the torus bag inflates (state as shown in FIG.4-(b)). When the pressure in the torus bag exceeds a predetermined pressure value, the compressed air is discharged through the gap between the torus bag and the floor(ground) to form an air foil (state as shown in FIG.4-(c)). Air consumption of the air-caster corresponds to an amount of the discharged air. In the state where the air foil is formed in addition to completion of lift by the air-caster, the structural object on the air-caster can be moved in lateral direction by pulling horizontally.

A conventional method for controlling the lift of a structural object in the case where the structure is lifted-and-transported using a plurality of air-casters is now described. First, a bottom face of a large structural object to be transported is divided into 4 or 5 sections to arrange a plurality of air-casters to each section. Piping for feeding compressed air into the plurality of air-casters in one section includes primary piping for feeding compressed air to the one section and secondary piping branching off from the primary piping for feeding the compressed air to each of the plurality of air-casters. The primary piping and the secondary piping have a primary flow control valve and a secondary flow control valve, respectively. Each air-caster does not always have the same amount of distance required for the lift (lift distance) when the same air flow rate or the same inner air pressure are provided, since the properties of the torus bags can vary from one to another. The secondary flow control valve has a function to compensate for the difference in the lift distances caused by the different properties of the torus bags. An operator can visually observe the difference in lift for the torus bags and manually control a valve opening for each primary flow control valve so that all the divided 4-5 sections can be gradually lifted in the same speed or be kept in the same level of lift distance. However, this conventional method has the following problems in the lift (lifting-up) process and landing (lifting-down) process.

It is difficult to lift a large structural object having a diameter of more than 10 m while maintaining the bottom face of the object horizontal and in good balance by manually controlling the opening of the flow control valve through visually observing the lift distance. In particular, after the lifting force by inner pressure of the torus bag becomes matched with the weight of the object, fine control of the air flow and inner pressure of the torus bag is required to make the air-caster float. However it is impossible for the operator to manually make such a fine control of the opening of the primary flow control valve in each divided section through visually observing the lift distance. Consequently, it is very difficult to lift a large structural object so that it is level horizontally and to make it float.

This difficulty also occurs when the structural object is landing (lifted down for landing) from the lifted (floating) position. During landing, it is also difficult to make a plurality of air-casters in the same section have the same lift distance only by controlling the opening of the primary flow control valve. Even if each of the secondary flow control valves is adjusted according to the individual property of each torus bag in advance so that the plurality of air-casters in the same section can have the same lift distance only by controlling the opening of the primary flow control valve, the floor (ground) where each of the torus bags is in contact is not always even, which leads to a difference in air consumption in each torus bag, which results in different lift distances for each torus bag.

Further, there are problems for moving a structural object in a lateral direction while maintaining flotation:

A problem can occur when the contour of the floor in which the object is being transported changes. The contour of the floor (ground) in the area where each torus bag is in contact usually changes as the structural object is transported. This may result in a drastic increase in the compressed air consumption. Therefore, while moving a structural object in a lateral direction while maintaining flotation, the opening of each primary flow control valve has to be momentarily controlled to adjust the flotation so that 4 or 5 sections will have almost the same lift distance, which task is very difficult to perform. It is also difficult to make a plurality of air-casters in the same section have the same lift distance by only controlling the opening of the primary flow control valve, since conditions of the floor (ground) in contact with the torus bags usually change as the air-caster moves. As for the flow control valve, the range of the opening of the valve where the flow rate is proportional to the degree of the opening is very limited. If the opening exceeds the range, then the flow rate drastically increases. Accordingly, in the case of manually controlling the opening of the valve, only the limited range where the flow rate is proportional to the degree of the opening is available. Other ranges where the relation between the degree of the opening and the flow rate is unclear or unstable cannot be practically available for manual control. Thus, it is impossible to manually feed compressed air instantly into the torus bag of the air-caster, where the compressed air is drastically consumed, to compensate for the consumption.

DE 34 00 101 C1 discloses a control system for an air cushion carrier having a pressure regulator in response to the transmitter for sensing the distance between the carrier and the gliding surface. GB-A-2 160 487 discloses an equipement for air cushion pressure regulation in which an air pressure inside an air cushion is measured and the generated pressure signal is used for controlling the inlet air pressure to the air cushion unit.

It is an object of the present invention to provide a method and an apparatus for controlling lift of at least one structural object in the case where the object(s) is (are) lifted-and-transported using a plurality of air-casters in order to solve the problems in the conventional technology set forth above, which can prevent the object(s) from having deformation such as a bend and/or warp while being lifted-and-transported.

This object can be achieved by the features defined in the claims.

In an embodiment of the present invention, the structural object to be lifted weighs at least one ton. Preferably, the structural object to be lifted weighs at least 20 tons. Most preferably, the structural object to be lifted weighs at least 200 tons.

An embodiment of the present invention is an apparatus for controlling the lift of at least one structural object comprising: a plurality of air-casters each of which has a torus bag; piping for feeding compressed air into the air-caster; a flow control valve installed in the piping; a pressure gauge installed in each air-caster for measuring an inner pressure of the torus bag; a lifted distance measuring gauge installed in each of air-casters for measuring a lifted distance of the air-caster; and a data processing unit for receiving pressure data measured by the pressure gauge and lifted distance data measured by the lifted distance measuring gauge and sending a valve opening control signal to the flow control valve based on the pressure data and/or a lifted distance data.

In an embodiment of the present invention, the change in pressure (ΔP) within the air-caster is controlled over time depending on the situation. The ΔP/time is referred to herein as a "pressure gradient value."

In the embodiment of the present invention above, the data processing unit comprises: basic data including a reference pressure gradient value, a modified pressure gradient value and the reference value for deviation of lift distance; means for calculating a deviation of lifted distance of each air-caster based on the lifted distance data from the lifted distance measuring gauge and comparing the deviation of lifted distance and the reference value for deviation of lift distance; means for shifting a pressure gradient value from the reference pressure gradient value to the modified pressure gradient value according to a result of comparing the deviation of the lift distance with the reference value for deviation of lift distance; means for calculating a reference pressure value at a specified time based on the time and the reference pressure gradient value or the modified pressure gradient value; means for calculating a result by comparing the pressure data measured by the pressure gauge and the reference pressure value at a specified time; and means for generating the valve opening control signal according to the calculated result based on the comparison and sending the generated signal to the flow control valve.

According to another embodiment, the present invention relates to a method for controlling the lift of a structural object using a plurality of air-casters each of which has a torus bag comprising the steps of: measuring an inner pressure of each torus bag; measuring the lifted distance of each air-caster; calculating the deviation of the lifted distance of each air-caster according to the measured lifted distance; comparing the calculated deviation to a reference value for deviation of lift distance; and setting a pressure gradient value for each air-caster according to the results of the comparison; calculating the reference pressure valve based on the pressure gradient value and time; comparing the measured pressure data and the reference pressure value; and controlling an opening of a flow control valve to control the flow of compressed air to be fed into the torus bag according to the results of the comparison of the measure of pressure data and the reference pressure value.

Thus, in order to shift the structural object from landing state to lifted state, a combination of controlling the valve opening so that the inner pressure of each air-caster can follow a specified pressure gradient and controlling the shift of the pressure gradient value so that the deviation of lift distance can stay within a predetermined range can be used.

The present invention is more specifically set forth in the following description with reference to the drawings, in which;
FIG. 1 is a flow diagram showing a method for controlling lift of a structural object using air-casters;
FIG.2 is a flow diagram showing a method for controlling lift of a structural object using air-casters while the structural object is lifted and moved;
FIG.3 is a flow diagram showing a method for controlling lift of a structural object using air-casters when the structural object is landing (lifted down for landing) from the lifted position;
FIG. 4 is a schematic of an air-caster used for the present invention;
FIG.5 is a schematic of a controlling apparatus used for the present invention;
FIG.6 is a graph showing a rough relationship between the time and lift distance with respect to each air-caster;

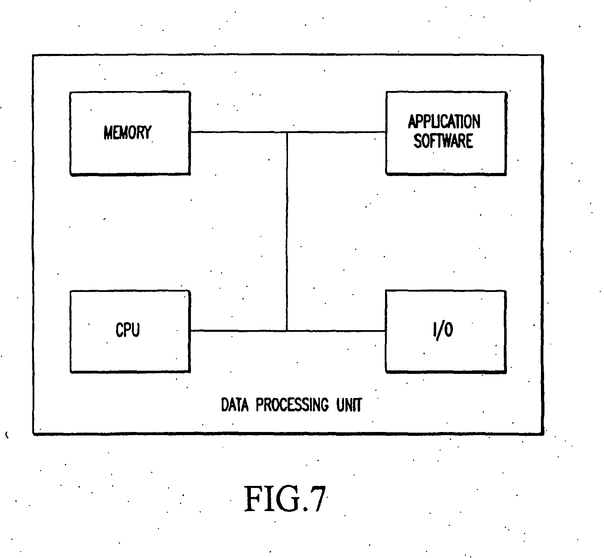

FIG.7 is an exemplary diagram of the components of the data processing apparatus; and

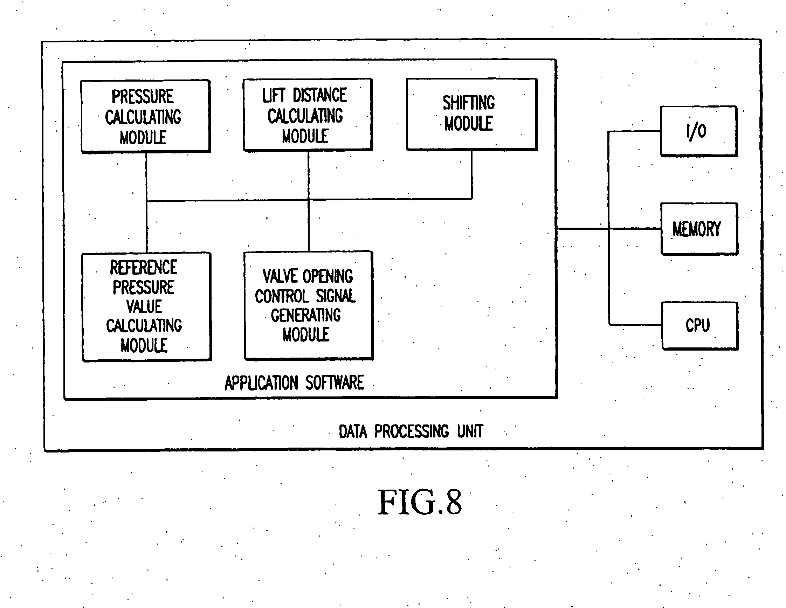

FIG.8 is also an exemplary diagram of the components of the data processing apparatus.

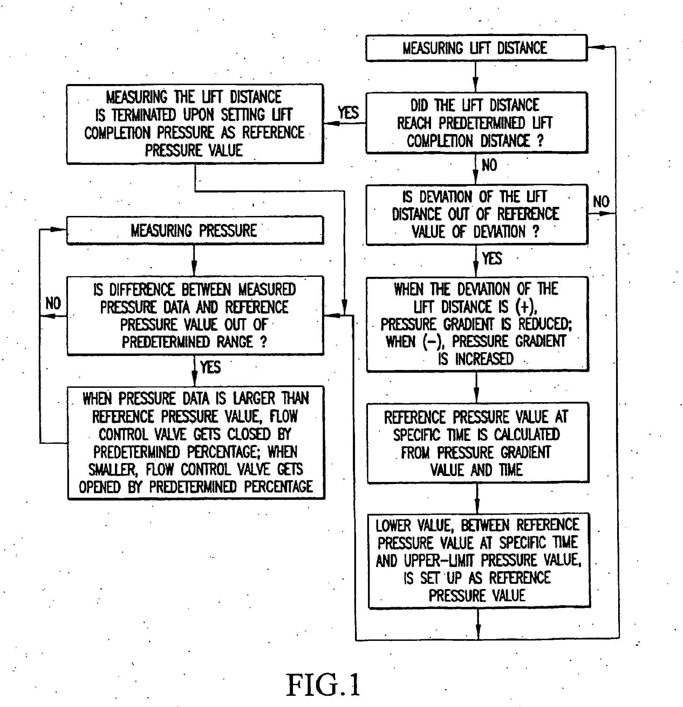

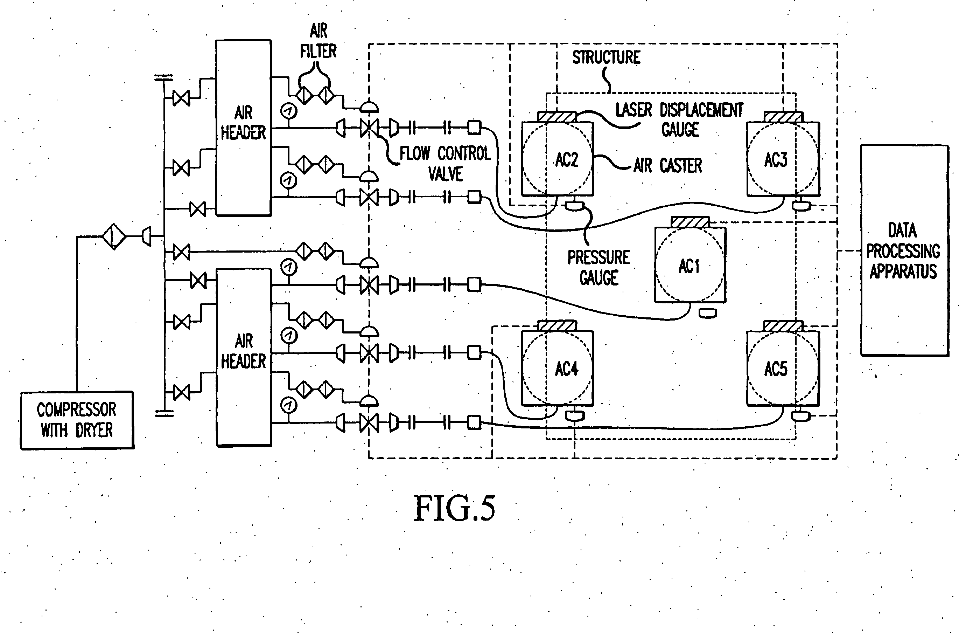

An embodiment of the invention is described using FIG. 5 which illustrates a schematic of a controlling apparatus and is described in FIG. 1, which is a flow diagram showing the method for controlling the lift of the structural object using air-casters. In order to lift and transport the structural object (by compressed air using air-casters), a plurality of air-casters are arranged to be underneath the structural object. The number of the air-caster is determined based on the weight of the structural object and performance of the air-caster. Any arrangement of the air-casters are possible so long as the structural object can be supported with good balance. In the embodiment shown in FIG.5, five air-casters (AC1-AC5) are arranged to lift a 230 ton structural object.

Each air-caster is equipped with a pressure gauge to measure inner pressure of the torus bag and the measured pressure data is sent to a data processing unit. Also each air-caster is equipped with a lift distance measuring gauge to measure lift distance of the structural object and measured distance data is sent to a data processing unit. The lift distance is defined as a distance between the bottom face of landing pad 7 and the surface of floor 8 shown in FIG. 4. The frequency (time interval) of the measurement of the pressure and/or the distance will vary depending upon the purpose, but is preferably about 1 cycle/second for fine pressure control and fine distance control. The frequency of cycles can be 0.01 to 1000 cycles/second, or more preferably 0.5 to 2 cycles/second. The frequencies can be set by the data processing unit or the pressure gauge or the lifted distance measuring gauge itself.

In FIG.5 a laser displacement gauge is used as a lift distance measuring gauge. In the laser displacement gauge, the distance to the object is measured in the following way: light is emitted, an optical path of the light is changed with prism or mirror, the light reaches the target object and is reflected by the target to return to sensor head.

Measuring accuracy of this gauge depends on the surface state of target object where the laser light is reflected. Therefore, it is preferable to color the surface or cover the surface with a colored object having a dull white or dull gray color which improves the precision of reflection.

Each piping for feeding compressed air into each of air-casters from the compressor is equipped with a flow control valve to which a valve opening control signal for controlling the opening of the flow control valve is sent from a data processing unit. In the example shown in FIG.5, a compressor equipped with a dryer is shown which feeds the compressed air through an air filter to remove foreign materials, and a flow control valve is shown which feeds compressed air into each of the air-casters. The compressor should preferably be capable of feeding much higher pressure of compressed air than the inner pressure required for the air-caster. For example, source pressure of the compressor can be 6 Kg/cm² to create a pressure of 3.5 Kg/ cm² for the torus bag of the air-caster.

In order to shift the structural object from a landing state to a lifting state, the inner pressure of the torus bag increases as time goes on according to a predetermined pressure gradient value until a base plate of the air-caster reaches a bottom plate of the structural object. For that purpose, a data processing unit sends a valve opening control signal to a flow control valve after comparing data from the pressure gauge with a reference pressure at a specified time which is determined by the time and the pressure gradient value. For example, if the measured inner pressure of torus bag is less than the reference pressure at the time, the data processing unit sends a valve opening control signal to make the valve opening increase by 1% to the flow control valve. The percentage for increasing the opening can be determined in proportion to the difference between the measured inner pressure of the torus bag and the reference pressure at the time. The valve opening control signal is sent to the flow control valve according to the frequency of the pressure measurement. The present invention is mainly directed to a lift control process after the base plate of the air-caster reaches the bottom plate of the structural object.

In the lift control process, a lift control shown in FIG.1 is performed, where both pressure measurements and lift measurements are performed. Inner pressure of the torus bag increases as time progresses according to a predetermined reference pressure gradient value. For that purpose, the data processing unit sends the valve opening control signal to the flow control valve after comparing the data from the pressure gauge with the reference pressure (from a reference pressure gradient) at a specified time. For example, if the measured inner pressure of a torus bag is less than the reference pressure at the time, the data processing unit sends a valve opening control signal to open the flow control valve an additional 1%. The percentage for increasing the opening can be determined in proportion to the difference between the measured inner pressure of torus bag and the reference pressure at the time.

It is preferable to set up the reference pressure gradient value as (several percent of the difference between a lift initiation pressure and a lift completion pressure)/min. In the case where an air-caster supports is 60-90 % of the load capacity of the air-caster (load factor 60-90%), the difference measured between a lift initiation pressure and a lift completion pressure can be from 0.5Kg/cm² to 0.8Kg/cm². Therefore, 0.02 Kg/cm²/min, which is about 3% of (from 0.5Kg/cm² to 0.8Kg/cm²), is set up as a reference pressure gradient value.

Based on lift distance of each air-caster which is measured at the same time as the pressure measurement, a deviation of lift distance for each air-caster (difference between each measured lift distance and an average lift distance) is calculated using the data processing unit. An average lift distance is normally calculated using lift distance data from all of the air-casters used. However, an average value calculated using the data from 60% or more of the total number of air-casters used can be practically useful for the purpose of calculating the deviation. If the deviation of lift distance of some air-caster deviates from a predetermined reference value for deviation of lift distance, a pressure gradient value applied to the air-caster is shifted from the reference pressure gradient to a modified pressure gradient. In an embodiment of the present invention, a reference value for deviation of lift distance and a modified pressure gradient value are set up as below in the data processing unit in advance.

| **Reference Value for Deviation of Lift Distance** | **Condition** | **Modified Pressure Gradient Value** |
|---|---|---|
| - 2mm | Deviation of lift distance of the air-caster is less than - 2mm | 0.04 Kg/cm²/min. |
| - 1mm | Deviation of lift distance of the air-caster is less than - 1mm | 0.03 Kg/cm²/min. |
| + 1mm | Deviation of lift distance of the air-caster is more than + 1mm | 0.01 Kg/cm²/min. |
| + 2mm | Deviation of lift distance of the air-caster is more than + 2mm | 0.00 Kg/cm²/min. |

When a pressure gradient value is changed to a modified pressure gradient value by the data processing unit for an air-caster, the data processing unit sends a valve opening control signal to a flow control valve of the said air-caster after comparing the data from pressure gauge with a reference pressure at a specified time calculated from the modified pressure gradient value.

Thus, in order to shift the structural object from the landing state to the lift state, a combination of controlling the valve opening so that the inner pressure of each air-caster can follow a specified pressure gradient and controlling the shift of pressure gradient value so that the deviation of lift distance can stay within a predetermined range can be used, which makes it possible to lift a large structural object having a bottom plate of 20 m in diameter without causing any bends or warps. The reference value for deviation of lift distance and the modified pressure gradient value can be modified as appropriate and the number of the reference value for deviation of lift distance can be changed, for example, from 4 in the above example to 6 or 2 (e.g., - 1mm and + 1mm) . For safer operation, it is preferable to set up an upper limit of inner pressure with the torus bag during the lift (lifting up) process in the data processing unit. A normal designed pressure of the air-caster (e.g., 3.5 - 5.0 Kg/cm²) can be an appropriate upper limit value.

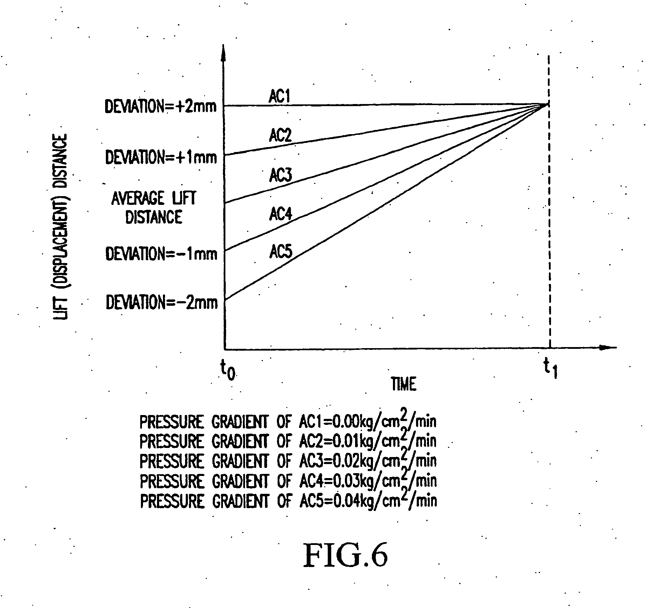

FIG.6 is a graph showing the rough relationship between the time and lift distance with respect to each air-caster according to one implementation (described below) of the present invention. At time to, #1 air-caster (AC1) is lifted 2mm more than the average lift distance which is calculated as an average of 5 lift distances for 5 air-casters. #2 air-caster (AC2) is lifted 1mm more than the average. #3 air-caster (AC3) is lifted equal to the average. #4 air-caster (AC4) is lifted 1mm less than the average. #5 air-caster (AC5) is lifted 2mm less than the average. Under the circumstances, the data processing unit shifts the pressure gradient of AC1 from 0.02 Kg/cm²/min. to 0.00 Kg/cm²/min., the pressure gradient of AC2 from 0.02 Kg/cm² /min. to 0.01 Kg/cm² /min., the pressure gradient of AC3 from 0.02 Kg/cm² /min. to 0.02 Kg/cm²/min. (no change), the pressure gradient of AC4 from 0.02 Kg/cm²/min. to 0.03 Kg/cm²/min., and the pressure gradient of AC5 from 0.02 Kg/cm²/min. to 0.04 Kg/cm²/min.

Then the data processing unit sends a valve opening control signal to a flow control valve so that the inner pressure of each air-caster can follow the shifted new pressure gradient (modified pressure gradient value). At time t₁ after a short period of time (less than the time interval for measuring the lift distance), the difference between the lift distances of air-casters becomes small. When a lift distance of each air-caster which is measured momentarily by a lift distance measuring gauge reaches a predetermined lift completion distance, the inner pressure at the time (lift completion pressure, e.g.,3.0.Kg/cm²) is set up as a reference pressure value in the data processing unit, and the measuring lift distance is terminated.

In the next stage the structural object is laterally transported while being lifted.

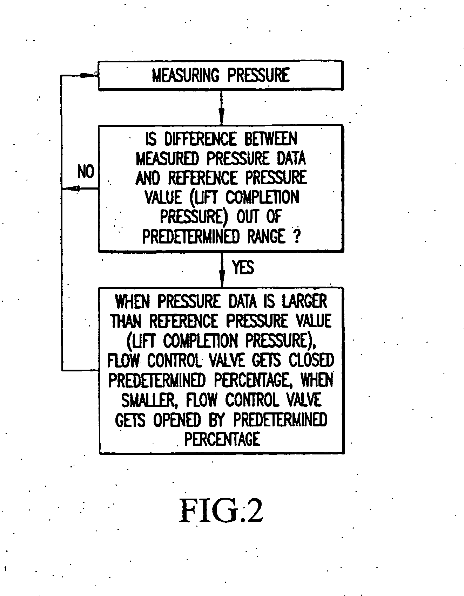

An embodiment of the present invention is a method for controlling lift of a structural object while being lifted and moved in lateral direction as described using FIG.2. To transport the structural object while being lifted, all that is needed is that the air casters (there are 5 air-casters shown in FIG.5) can support the weight of the structural object (e.g. , 230 ton) at the lift completion pressure. It is unavoidable for the structural object to tend to slightly tilt in the pulling direction when the structure is pulled and moved, however, it is not necessary to correct the tilt. Therefore, only a pressure control, i.e. , pressure of each air-caster is kept at the lift completion pressure, is required unlike the control performed in FIG.1 where the measuring lift distance is required.

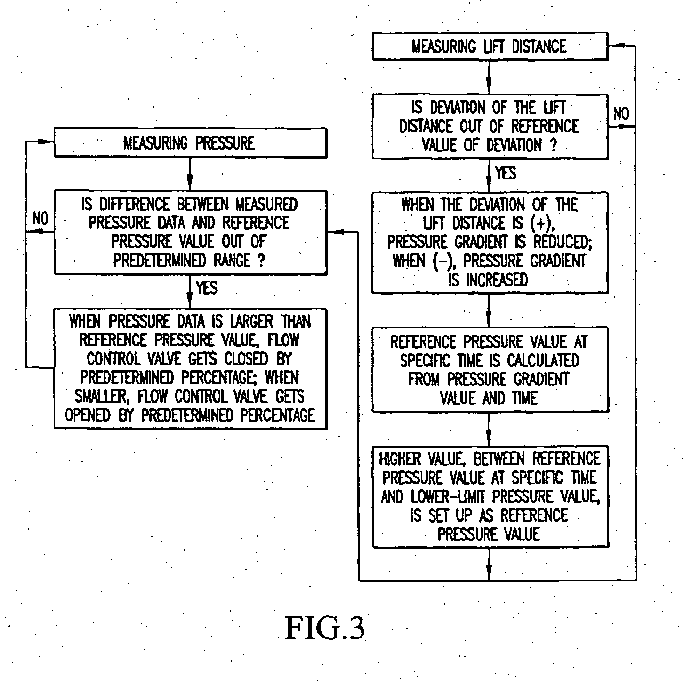

FIG.3 is a flow diagram showing a method for controlling lift of a structural object when the structural object is landing (lifted down for landing) from the floating position.

The control method for the landing is almost the same as the one for starting the lift except that the reference pressure gradient value is set as - 0.02 kg/cm²/min. Further the reference value for deviation of lift distance and the modified pressure gradient value are set in the data processing unit as below.

| **Reference Value For Deviation Of Lift Distance** | **Condition** | **Modified Pressure Gradient Value** |
|---|---|---|
| - 2mm | Deviation of lift distance of the air-caster is less than - 2mm | 0.00 Kg/cm² /min. |
| - 1mm | Deviation of lift distance of the air-caster is less than - 1mm | - 0.01 Kg/cm² /min. |
| + 1mm | Deviation of lift distance of the air-caster is more than + 1mm | - 0.03 Kg/cm² /min. |
| + 2mm | Deviation of lift distance of the air-caster is more than + 2mm | - 0.04 Kg/cm²/min. |

For safer operations, it is preferable to set up a lower limit of inner pressure with the torus bag during the landing process in the data processing unit. A pressure at which the air-caster just contacts the structural object (bottom plate) (e.g., 0.5 Kg/cm²) can be an appropriate lower limit value.

By using the method and the apparatus for the lift control set forth above, the bottom face of a structural object can be automatically kept in parallel (horizontal) to the floor regardless of the floor contour to which the air-caster faces, which makes it possible to lift and transport a large structural object without causing deformations such as bends or warps. In the case of transportation of the bottom part of a blast furnace which is lined on the inside with refractory materials such as brick, it is strictly required to avoid deformation and/or stress to the refractory materials. The method and the apparatus for the lift control set forth above can be preferably applied to the transportation of a structural object such as a bottom part block of a blast furnace which is lined on the inside with refractory materials.

## Claims

1. An apparatus for controlling lift of at least one structural object comprising:
a plurality of air-casters (1) each of which has a torus bag (6);
piping (3) for feeding compressed air into at least one of the air-casters (1);
a flow control valve installed in the piping; and
a lift distance measuring gauge operatively associated with each of said air-casters (1) for measuring a lifted distance of the air-caster **characterized by** a pressure gauge operatively associated with each air-caster (1) for measuring a pressure of the torus bag (6); and
a data processing unit for receiving pressure data measured by the pressure gauge and lift distance data measured by the lifted distance measuring gauge and for sending a valve opening control signal to the flow control valve based on the pressure data and lift distance data,
wherein the data processing unit comprises:
data comprising a reference pressure gradient value, a modified pressure gradient value and a reference value for deviation of lift distance;
means for calculating a deviation of lift distance of each air-caster (1) based on the lift distance data from the lift distance measuring gauge and comparing the deviation of lift distance with the reference value for deviation of lift distance;
means for shifting a pressure gradient value from the reference pressure gradient value to the modified pressure gradient value based upon a comparison between the deviation of lift distance and the reference value for deviation of lift distance;
means for calculating a theoretical reference pressure value based on the reference pressure gradient value at a specified time or the modified pressure gradient value at a specified time:
means for comparing the pressure data measured by the pressure gauge with the theoretical reference pressure value: and
means for generating the valve opening control signal according to the comparison of the pressures and sending the generated signal to the flow control valve.

2. An apparatus according to claim 1,
wherein the data processing unit comprises:
a pressure calculating module for calculating a result by comparing the pressure data measured by the pressure gauge with at least one reference pressure value; and
a valve opening control signal generating module for generating the valve opening control signal according to the calculated result and sending the generated signal to the flow control valve.

3. An apparatus according to claims 1 or 2,
wherein the data processing unit comprises:
data comprising a reference pressure gradient value, a modified pressure gradient value and a reference value for deviation of lift distance;
lift distance calculating module for calculating a deviation of lift distance of each air-caster based on the lift distance data from a lift distance measuring gauge and comparing the deviation of lift distance with the reference value for deviation of lift distance;
a shifting module for shifting a pressure gradient value from the reference pressure gradient value to the modified pressure gradient value based upon a comparison between the deviation of lift distance and the reference value for deviation of lift distance;
a reference pressure value calculating module for calculating a reference pressure value at a specified time based on the time and the reference pressure gradient value or the modified pressure gradient value;
a pressure calculating module for calculating a difference between the pressure data measured by the pressure gauge and a reference pressure value at a specified time; and
a valve opening control signal generating module for generating the valve opening control signal according to the calculated difference in pressure and sending the generated signal to the flow control valve.

4. A method for controlling a lift of at least one object using a plurality of air-casters (1) each of which has a torus bag (6) comprising steps of:
measuring a pressure in each torus bag (6);
measuring a lift distance of each air-caster;
calculating a deviation of lift distance of each air-caster (1); and
setting a pressure gradient value for each air-caster (1) according to a result of the calculated deviation ;
calculating a reference pressure value based on the pressure gradient value and time;
comparing the measured pressure data and the reference pressure value using a data processing unit; and
controlling an opening of a flow control valve for controlling a flow of compressed air to be fed into the torus bag (6) according to a result of the comparison of the measured pressure data and the reference pressure value.

5. A method according to claim 4, wherein the step of setting a pressure gradient value is made by reducing the pressure gradient value when the deviation of lift distance is more than a predetermined reference value for deviation of lift distance.

6. A method according to claim 4 or 5, wherein the step of setting a pressure gradient value is made by increasing the pressure gradient value when the deviation of lift distance is less than a predetermined reference value for deviation of lift distance.

7. A method according to any one of claims 4 to 6,
further comprising a step of comparing the calculated deviation with a plurality of reference values for deviation of lift distance; and the step of setting a pressure gradient value is made by setting a plurality of pressure gradient values according to the result of the comparison of the calculated deviation and the plurality of reference value for deviation of lift distance.

8. A method according to any one of claims 4 to 7,
wherein a reference pressure value is the lower value between a theoretical reference pressure value as calculated from the applied pressure gradient over a specified time and an upper limit of pressure.

9. A method according to any one of claims 4 to 7,
wherein a reference pressure value is the higher value between a theoretical reference pressure value as calculated from the applied pressure gradient over a specified time and a lower limit of pressure.

10. A method according to claim 5 or 6, wherein the pressure gradient value is reduced or increased by 0.01 to 5%.

## Patentansprüche

1. Vorrichtung zur Steuerung der Hubhöhe von mindestens einem Objekt mit:
mehreren Luftlaufrollen (1), von denen jede einen Torusschlauch (6) hat;
einer Rohrleitung (3) zum Einspeisen von Druckluft in mindestens eine der Luftlaufrollen (1);
einem in der Rohrleitung installierten Strömungssteuerventil; und
einem Hubabstands-Messgerät, das mit jeder der Luftlaufrollen (1) zum Messen eines Hubabstands von der Luftlaufrolle wirkend verbunden ist,
**gekennzeichnet durch**
ein Druckmessgerät, das mit jeder Luftlaufrolle (1) zum Messen eines Drucks des Torusschlauchs (6) wirkend verbunden ist; und
eine Datenverarbeitungseinheit zum Empfangen von Druckdaten, die **durch** das Druckmessgerät gemessen wurden, und Hubabstandsdaten, die **durch** das Hubabstands-Messgerät gemessen wurden, und zum Senden eines Ventilöffnungs-Steuersignals zum Strömungssteuerventil auf der Basis der Druckdaten und der Hubabstandsdaten,
wobei die Datenverarbeitungseinheit aufweist:
Daten mit einem Bezugs-Druckgefällewert, einem modifizierten Druckgefällewert und einem Bezugswert zur Abweichung des Hubabstands;
eine Einrichtung zum Berechnen einer Abweichung des Hubabstands von jeder Luftlaufrolle (1) auf der Basis der Hubabstandsdaten vom Hubabstands-Messgerät und Vergleichen der Abweichung des Hubabstands mit dem Bezugswert zur Abweichung des Hubabstands;
eine Einrichtung zum Verschieben eines Druckgefällewerts vom Bezugs-Druckgefällewert zum modifizierten Druckgefällewert auf der Basis eines Vergleichs zwischen der Abweichung des Hubabstands und dem Bezugswert zur Abweichung des Hubabstands;
eine Einrichtung zum Berechnen eines theoretischen Bezugsdruckwerts auf der Basis des Bezugs-Druckgefällewerts zu einem vorgegebenen Zeitpunkt oder des modifizierten Druckgefällewerts zu einem vorgegebenen Zeitpunkt;
eine Einrichtung zum Vergleichen der **durch** das Druckmessgerät gemessenen Druckdaten mit dem theoretischen Bezugsdruckwert; und
eine Einrichtung zum Erzeugen des Ventilöffnungs-Steuersignals entsprechend dem Vergleich der Drücke und Senden des erzeugten Signals zum Strömungssteuerventil.

2. Vorrichtung nach Anspruch 1, wobei die Datenverarbeitungseinheit aufweist:
ein Druckberechnungsmodul zum Berechnen eines Ergebnisses durch Vergleichen der durch das Druckmessgerät gemessenen Druckdaten mit mindestens einem Bezugsdruckwert; und
ein Ventilöffnüngs-Steuersignal-Erzeugungsmodul zum Erzeugen des Ventilöffnungs-Steuersignals entsprechend dem berechneten Ergebnis und Senden des erzeugten Signals zum Strömungssteuerventil.

3. Vorrichtung nach Anspruch 1 oder 2, wobei die Datenverarbeitungseinheit aufweist:
Daten mit einem Bezugs-Druckgefällewert, einem modifizierten Druckgefällewert und einem Bezugswert zur Abweichung des Hubabstands;
ein Hubabstands-Berechnungsmodul zum Berechnen einer Abweichung des Hubabstands von jeder Luftlaufrolle auf der Basis der Hubabstandsdaten von einem Hubabstands-Messgerät und Vergleichen der Abweichung des Hubabstands mit dem Bezugswert zur Abweichung des Hubabstands;
ein Verschiebungsmodul zum Verschieben eines Druckgefällewerts vom Bezugs-Druckgefällewert zum modifizierten Druckgefällewert auf der Basis eines Vergleichs zwischen der Abweichung des Hubabstands und dem Bezugswert zur Abweichung des Hubabstands;
ein Bezugsdruckwert-Berechnungsmodul zum Berechnen eines Bezugsdruckwerts zu einem vorgegebenen Zeitpunkt auf der Basis der Zeit und des Bezugs-Druckgefällewerts oder des modifizierten Druckgefällewerts;
ein Druckberechnungsmodul zum Berechnen einer Differenz zwischen dem durch das Druckmessgerät gemessenen Druckdaten und einem Bezugsdruckwert zu einem vorgegebenen Zeitpunkt; und
ein Ventilöffnungs-Steuersignal-Erzeugungsmodul zum Erzeugen eines Ventilöffnungs-Steuersignals entsprechend der berechneten Differenz des Drucks und Senden des erzeugten Signals zum Strömungssteuerventil.

4. Verfahren zur Steuerung einer Hubhöhe von mindestens einem Objekt mittels mehrerer Luftlaufrollen (1), von denen jede einen Torusschlauch (6) hat, mit den Schritten:
Messen eines Drucks in jedem Torusschlauch (6);
Messen eines Hubabstands von jeder Luftlaufrolle;
Berechnen einer Abweichung des Hubabstands von jeder Luftlaufrolle (1); und
Einstellen eines Druckgefällewerts für jede Luftlaufrolle (1) entsprechend einem Ergebnis der berechneten Abweichung;
Berechnen eines Bezugsdruckwerts auf der Basis des Druckgefällewerts und der Zeit;
Vergleichen der gemessenen Druckdaten und des Bezugsdruckwerts mittels einer Datenverarbeitungseinheit; und
Steuern einer Öffnung eines Strömungssteuerventils zur Steuerung einer Strömung von in den Torusschlauch (6) einzuspeisender Druckluft entsprechend einem Ergebnis des Vergleichs der gemessenen Druckdaten und des Bezugsdruckwerts.

5. Verfahren nach Anspruch 4, wobei der Schritt zum Einstellen eines Druckgefällewerts durch Reduzieren des Druckgefällewerts vorgenommen wird, wenn die Abweichung des Hubabstands größer als ein vorgegebener Bezugswert zur Abweichung des Hubabstands ist.

6. Verfahren nach Anspruch 4 oder 5, wobei der Schritt zum Einstellen eines Druckgefällewerts durch Erhöhen des Druckgefällewerts vorgenommen wird, wenn die Abweichung des Hubabstands geringer als ein vorgegebener Bezugswert zur Abweichung des Hubabstands ist.

7. Verfahren nach einem der Ansprüche 4 bis 6, ferner mit einem Schritt zum Vergleichen der berechneten Abweichung mit mehreren Bezugswerten zur Abweichung des Hubabstands,
wobei der Schritt zum Einstellen eines Druckgefällewerts durch Einstellen mehrerer Druckgefällewerte entsprechend dem Ergebnis des Vergleichs der berechneten Abweichung und der mehreren Bezugswerte zur Abweichung des Hubabstands vorgenommen wird.

8. Verfahren nach einem der Ansprüche 4 bis 7, wobei ein Bezugsdruckwert der niedrigere Wert zwischen einem theoretischen Bezugsdruckwert, wie er anhand des angewandten Druckgefälles über einen vorgegebenen Zeitraum berechnet wird, und einem oberen Grenzwert des Drucks ist.

9. Verfahren nach einem der Ansprüche 4 bis 7, wobei ein Bezugsdruckwert der höhere Wert zwischen einem theoretischen Bezugsdruckwert, wie er anhand des angewandten Druckgefälles über einen vorgegebenen Zeitraum berechnet wird, und einem unteren Grenzwert des Drucks ist.

10. Verfahren nach Anspruch 5 oder 6, wobei der Druckgefällewert um 0,01 bis 5% reduziert oder erhöht wird.

## Revendications

1. Dispositif pour régler la hauteur de levage d'au moins un objet structurel comprenant :
une pluralité de coussins d'air (1) dont chacun a une enveloppe torique (6),
une tuyauterie (3) pour amener de l'air comprimé dans au moins un des coussins d'air (1),
une vanne régulatrice de débit installée dans la tuyauterie, et
une jauge de mesure de la distance de levage opérationnellement associée à chacun desdits coussins d'air (1) pour mesurer une distance de levage du coussin d'air,
**caractérisé par**
une jauge de pression opérationnellement associée à chaque coussin d'air (1) pour mesurer une pression de l'enveloppe torique (6) et
une unité de traitement des données pour recevoir des données de pression mesurées par la jauge de pression et des données de distance de levage mesurées par la jauge de mesure de la distance de levage et pour envoyer un signal de commande d'ouverture de vanne à la vanne régulatrice de débit sur la base des données de pression et des données de distance de levage,
dans lequel l'unité de traitement des données comprend:
des données comprenant une valeur de référence de gradient de pression, une valeur modifiée de gradient de pression et une valeur de référence pour une déviation de la distance de levage,
des moyens pour calculer une déviation de la distance de levage de chaque coussin d'air (1) sur la base des données de distance de levage provenant de la jauge de mesure de la distance de levage et pour comparer la déviation de la distance de levage à la valeur de référence pour la déviation de la distance de levage,
des moyens pour faire passer une valeur de gradient de pression de la valeur de référence de gradient de pression à la valeur modifiée de gradient de pression sur la base d'une comparaison entre la déviation de la distance de levage et la valeur de référence pour une déviation de la distance de levage,
des moyens pour calculer une valeur de référence théorique de pression sur la base de la valeur de référence de gradient de pression à un moment spécifié ou la valeur modifiée de gradient de pression à un moment spécifié,
des moyens pour comparer les données de pression mesurées par la jauge de pression à la valeur de référence théorique de pression, et
des moyens pour générer le signal de commande d'ouverture de vanne en fonction de la comparaison des pressions et pour envoyer le signal généré à la vanne régulatrice de débit.

2. Dispositif selon la revendication 1, dans lequel l'unité de traitement des données comprend :
un module de calcul de la pression pour calculer un résultat en comparant les données de pression mesurées par la jauge de pression à au moins une valeur de référence de pression, et
un module de génération de signal de commande d'ouverture de vanne pour générer le signal de commande d'ouverture de vanne en fonction du résultat calculé et pour envoyer le signal généré à la vanne régulatrice de débit.

3. Dispositif selon la revendication 1 ou 2, dans lequel l'unité de traitement des données comprend :
des données comprenant une valeur de référence de gradient de pression, une valeur modifiée de gradient de pression et une valeur de référence pour une déviation de la distance de levage,
un module de calcul de la distance de levage pour calculer une déviation de la distance de levage de chaque coussin d'air sur la base des données de distance de levage provenant d'une jauge de mesure de la distance de levage et pour comparer la déviation de la distance dé levage à la valeur de référence pour une déviation de la distance de levage,
un module de transposition pour faire passer une valeur de gradient de pression de la valeur de référence de gradient de pression à la valeur modifiée de gradient de pression sur la base d'une comparaison entre la déviation de la distance de levage et la valeur de référence pour une déviation de la distance de levage,
un module de calcul de la valeur de référence de pression pour calculer une valeur de référence de pression à un moment spécifié sur la base du moment et de la valeur de référence de gradient de pression ou de la valeur modifiée de gradient de pression,
un module de calcul de la pression pour calculer une différence entre les données de pression mesurées par la jauge de pression et une valeur de référence de pression à un moment spécifié, et
un module de génération de signal de commande d'ouverture de vanne pour générer le signal de commande d'ouverture de vanne en fonction de la différence de pression calculée et pour envoyer le signal généré à la vanne régulatrice de débit.

4. Procédé pour régler une hauteur de levage d'au moins un objet en utilisant une pluralité de coussins d'air (1) dont chacun a une enveloppe torique (6), comprenant les étapes consistant à :
mesurer une pression dans chaque enveloppe torique (6),
mesurer une distance de levage de chaque coussin d'air,
calculer une déviation de la distance de levage de chaque coussin d'air (1), et
fixer une valeur de gradient de pression pour chaque coussin d'air (1) en fonction d'un résultat de la déviation calculée,
calculer une valeur de référence de pression sur la base de la valeur du gradient de pression et du moment,
comparer les données de pression mesurées et la valeur de référence de pression en utilisant une unité de traitement des données, et
commander une ouverture de la vanne régulatrice de débit pour régler un débit d'air comprimé à amener dans l'enveloppe torique (6) en fonction d'un résultat de la comparaison des données de pression mesurées et de la valeur de référence de pression.

5. Procédé selon la revendication 4, dans lequel l'étape consistant à régler une valeur de gradient de pression est accomplie en réduisant la valeur de gradient de pression quand la déviation de la distance de levage est supérieure à une valeur de référence prédéterminée pour une déviation de la distance de levage.

6. Procédé selon la revendication 4 ou 5, dans lequel l'étape consistant à régler une valeur de gradient de pression est accomplie en augmentant la valeur de gradient de pression quand la déviation de la distance de levage est inférieure à une valeur de référence prédéterminée pour une déviation de la distance de levage.

7. Procédé selon l'une quelconque des revendications 4 à 6, comprenant en outre une étape consistant à comparer la déviation calculée à une pluralité de valeurs de référence pour une déviation de la distance de levage, et l'étape consistant à fixer une valeur de gradient de pression est accomplie en fixant une pluralité de valeurs de gradient de pression en fonction du résultat de la comparaison de la déviation calculée et de la pluralité de valeurs de référence pour une déviation de la distance de levage.

8. Procédé selon l'une quelconque des revendications 4 à 7, dans lequel une valeur de référence de pression est la valeur inférieure entre une valeur de référence théorique de la pression telle que calculée à partir du gradient de pression appliqué pendant un temps spécifié et une limite supérieure de pression.

9. Procédé selon l'une quelconque des revendications 4 à 7, dans lequel une valeur de référence de pression est la valeur supérieure entre une valeur de référence théorique de la pression telle que calculée à partir du gradient de pression appliqué pendant un temps spécifié et une limite inférieure de pression.

10. Procédé selon la revendication 5 ou, 6, dans lequel la valeur du gradient de pression est diminuée ou augmentée de 0,01 à 5 %.
